# EUROPEAN PATENT APPLICATION

(11) **EP 4 814 143 A1**
(43) Date of publication of application: **30.09.2026**
(21) Application number: 25800847.3
(22) Date of filing: 07.07.2025
(51) Int. Cl.: C22B 23/00, C22B 3/44

(54) **METHOD FOR PRECIPITATING NICKEL AND COBALT FROM NICKEL- AND COBALT-CONTAINING SOLUTION, AND NICKEL-COBALT HYDROXIDE PRODUCT**

(30) Priority: 10.02.2025 CN 202510145096
(71) Applicant: China Enfi Engineering Corporation, Beijing 100038 (CN); CHINA ENFI ENGINEERING CO., LTD., 100038 Beijing (CN)
(72) Inventor: SUN, Ninglei, Haidian District, Beijing 100038 (CN); YIN, Shuyan, Haidian District, Beijing 100038 (CN); DING, Jian, Haidian District, Beijing 100038 (CN); LI, Nuo, Haidian District, Beijing 100038 (CN); DING, Shurong, Haidian District, Beijing 100038 (CN); ZHANG, Yang, Haidian District, Beijing 100038 (CN); HAN, Guoqiang, Haidian District, Beijing 100038 (CN); LIU, Guo, Haidian District, Beijing 100038 (CN)
(74) Representative: Tiburzi, Andrea
(86) International application number: PCT/CN2025/107303
(87) International publication number: WO 2026/166048

(57) **Abstract**

The present disclosure provides a method for precipitating nickel and cobalt in a nickel-cobalt-containing solution and a nickel-cobalt hydroxide product. The method includes: S100, conducting a seed pretreatment reaction on the nickel-cobalt-containing solution by using a first nickel-cobalt precipitation underflow to form a pretreated nickel-cobalt ore slurry; S200, adding an alkaline precipitation-inducing agent to a second nickel-cobalt precipitation underflow or a first nickel-cobalt precipitation overflow to conduct a base conversion reaction to form a base-converted crystal slurry; S300, continuously introducing the pretreated nickel-cobalt ore slurry and the base-converted crystal slurry into a reactor for conducting a nickel-cobalt precipitation reaction to obtain a nickel-cobalt precipitated ore slurry; S400, continuously conducting a thickening separation treatment on the nickel-cobalt precipitated ore slurry; and S500, sequentially filtering and washing a third nickel-cobalt precipitation underflow to obtain a nickel-cobalt hydroxide product, which solves the problems in the related art: the product has a small particle size and is less prone to settle, the filter cake has a high water content, the precipitation rate is poor, and the magnesium content is high before technical improvement, when precipitating nickel and cobalt in the nickel-cobalt-containing solution.

## Description

### Technical Field

### Cross-Reference To Related Applications

The present disclosure claims priority to Chinese Invention Patent Application No. 202510145096.9, filed to the Patent Office of the People's Republic of China on February 10, 2025, titled "Method for precipitating nickel and cobalt in a nickel-cobalt-containing solution and nickel-cobalt hydroxide product", the entire contents of which are incorporated herein by reference.

### Technical Field

The present disclosure relates to the technical field of laterite nickel ore hydrometallurgy, in particular to a method for precipitating nickel and cobalt in a nickel-cobalt-containing solution and nickel-cobalt hydroxide product.

### Background Art

The nickel-cobalt-containing solution, such as laterite nickel ore acid leaching iron-aluminum-eliminated solution, is obtained by laterite nickel ore hydrometallurgy. The main process includes atmospheric pressure leaching and high pressure leaching, usually sulfuric acid leaching, wherein the high pressure acid leaching process is used for treating limonite-type laterite nickel ore, has the advantages of short leaching time, low iron leaching rate, high nickel-cobalt leaching rate and recovery rate, and low production cost, etc., and in recent years, it has become the preferred process for most of the new project of laterite nickel ore wet process. The high pressure leaching process of the laterite nickel ore mainly includes processes such as high pressure acid leaching, ore slurry neutralization, countercurrent washing, neutralization and impurity removal, nickel-cobalt precipitation etc. The nickel-cobalt precipitation process is aimed at the solution of laterite nickel ore high pressure acid leaching solution after neutralization and impurity removal, and the solution is also referred to as a laterite nickel ore acid leaching iron-aluminum-eliminated solution.

The nickel-cobalt precipitation process in the related art mostly uses sodium hydroxide precipitation method or sulfide precipitation method, for example:
Patent No. CN101575676A proposes a method for iron removal by precipitation and nickel-cobalt enrichment, wherein the nickel-cobalt enrichment process uses a vulcanizing agent for sulfurization precipitation, and in the nickel-cobalt precipitation enrichment, a vulcanizing agent such as one or more selected from a group consisting of hydrogen sulfide, hydrogen persulfide, sodium hydrosulfide, sodium sulfide, potassium sulfide, ammonium sulfide, magnesium sulfide and zinc sulfide is used. The hydrogen sulfide precipitation has the best effect, but hydrogen sulfide is highly toxic, requires high operation and system requirements, and the subsequent treatment on the intermediate product of sulfurization precipitation is difficult.
Patent No. CN102061387A discloses a two-stage nickel precipitation method, in which a NaOH solution is added to a nickel sulfate solution containing magnesium, the pH is adjusted to 7.5 to 8.5, the reaction temperature is 20°C to 80°C, the reaction time is 0.5 hours to 3 hours, and the resulting precipitate is separated from the mother liquor. The precipitate enters the next step, a NaOH solution is added to the mother liquor, the pH is adjusted to 9 to 10, the reaction temperature is 20°C to 80°C, the reaction time is 0.5 hours to 3 hours, and the finally obtained precipitate is separated from the mother liquor and returned to the stirring and leaching system for circulation. The patent directly precipitates nickel and cobalt with sodium hydroxide or mixed alkali solution. The product is fine and difficult to settle, resulting in a higher water content of the product.

In the process for preparing cobalt hydroxide from cobalt sulfate solution proposed in patent No. CN101921001A, first, the cobalt sulfate solution is subjected to a first cobalt precipitation with magnesium hydroxide slurry in a primary cobalt precipitation tank, and after the primary cobalt precipitation slurry obtained by the reaction passes through a primary cobalt precipitation buffer tank, 30% to 50% of the obtained ore slurry is returned to the primary cobalt precipitation tank, the remaining ore slurry is subjected to a pressure filtration. The filter cake obtained by the pressure filtration is sent to a drying process, the dried cobalt hydroxide is the product, and the filtrate is subjected to a second cobalt precipitation with magnesium hydroxide. In this technology, magnesium hydroxide is directly used as a precipitant, but its alkalinity is limited. Although the local over-alkalinity is avoided, the activity of magnesium hydroxide is reduced after slurrying, resulting in an adverse effect of low cobalt precipitation rate.

In conclusion, the hydrogen sulfide precipitation process of nickel and cobalt is widely used, which has the advantages of high precipitation rate, low precipitation pH, and recovery of nickel and cobalt without purification under acidic conditions of leaching solution. However, hydrogen sulfide is highly toxic, posing significant safety and environmental hazards, and the subsequent treatment process of intermediate products obtained by the precipitation is also extremely complicated. Nickel-cobalt precipitation with sodium hydroxide has a simple process and a small equipment investment. However, the inventors are aware that directly using strongly alkaline sodium hydroxide as a precipitant will result in a small particle size of the nickel-cobalt hydroxide (MHP) precipitation product, and poor settling ability, which is not conducive to the liquid-solid separation process, and the water content of the filter cake is high, which makes both subsequent transportation and processing difficult. In addition, magnesium hydroxide is directly used as a precipitant, due to its limited alkalinity and low activity, the problem of low precipitation rate is easily caused.

In view of these, the present disclosure is proposed.

### Disclosure

In view of the above problems, an object of the present disclosure is to provide a method for precipitating nickel and cobalt in a nickel-cobalt-containing solution and a nickel-cobalt hydroxide product, so as to solve the problems of small MHP particle size, less prone to settle, high water content of the filter cake, poor precipitation rate, and high magnesium content before technical improvement when precipitating nickel and cobalt in a nickel-cobalt-containing solution in the related art.

In order to achieve the above object, according to one aspect of the present disclosure, there is provided a method for precipitating nickel and cobalt in a nickel-cobalt-containing solution, cations in the nickel-cobalt-containing solution include nickel ions, cobalt ions, magnesium ions and manganese ions, the method comprises: S100, conducting a seed pretreatment reaction on the nickel-cobalt-containing solution by using a first nickel-cobalt precipitation underflow to form a pretreated nickel-cobalt ore slurry; S200, adding an alkaline precipitation-inducing agent to a second nickel-cobalt precipitation underflow for conducting a base conversion reaction to form a base-converted crystal slurry; or adding an alkaline precipitation-inducing agent to a first nickel-cobalt precipitation overflow for conducting a base conversion reaction to form a base-converted crystal slurry; S300, continuously introducing the pretreated nickel-cobalt ore slurry and the base-converted crystal slurry into a reactor for conducting a nickel-cobalt precipitation reaction to obtain a nickel-cobalt precipitated ore slurry; S400, continuously conducting a thickening separation treatment on the nickel-cobalt precipitated ore slurry to obtain a nickel-cobalt precipitation underflow consisting of the first nickel-cobalt precipitation underflow, the second nickel-cobalt precipitation underflow and a third nickel-cobalt precipitation underflow, and a nickel-cobalt precipitation overflow comprising the first nickel-cobalt precipitation overflow; and S500, sequentially filtering and washing the third nickel-cobalt precipitation underflow to obtain a nickel-cobalt hydroxide product.

In an optional technical solution, in the above S100, the temperature of the seed pretreatment reaction is 25°C to 100°C, preferably 50°C to 80°C, and the time of the seed pretreatment reaction is 0.1 h to 10 h, preferably 1 h to 5 h.

In an optional technical solution, in the above S100, the mass of the first nickel-cobalt precipitation underflow is 1% to 99% of the total mass of the nickel-cobalt precipitation underflow.

In an optional technical solution, in the above S200, the total mass concentration of the alkaline precipitation-inducing agent is 0.1% to 60%, preferably 3% to 20%, and further preferably 3% to 15%.

In an optional technical solution, in the above S200, the alkaline precipitation-inducing agent is a mixture of an alkaline substance and water, wherein the alkaline substance is any one or more selected from a group consisting of sodium hydroxide, potassium hydroxide, calcium hydroxide, magnesium hydroxide, calcium oxide, magnesium oxide and a carbonate.

In an optional technical solution, in the above S200, the alkaline substance is a mixture of sodium hydroxide and potassium hydroxide, and a mass ratio of sodium hydroxide to potassium hydroxide is (1 to 4):(1 to 4).

In an optional technical solution, based on the theoretical total mole number of hydroxide and carbonate required for nickel-cobalt precipitation in the above pretreated nickel-cobalt ore slurry, the total mole number of hydroxide and/or carbonate in the alkaline precipitation-inducing agent is 0.5 times to 1.5 times, preferably 0.8 times to 0.9 times the theoretical total mole number.

In an optional technical solution, in the above S200, the temperature of the base conversion reaction is 25°C to 100°C, preferably 50°C to 60°C, and the time of the base conversion reaction is 0.1 min to 30 min, preferably 1 min to 10 min, further preferably 3 min to 5 min.

In an optional technical solution, in the above S200, the mass of the first nickel-cobalt precipitation overflow is 1% to 99%, preferably 5% to 30%, of the total mass of the nickel-cobalt precipitation overflow.

In an optional technical solution, in the above S200, the mass of the second nickel-cobalt precipitation underflow is 1% to 99% of the total mass of the nickel-cobalt precipitation underflow.

In an optional technical solution, when the alkaline precipitation-inducing agent is added to the above first nickel-cobalt precipitation overflow for the base conversion reaction to form the base-converted crystal slurry, the mass ratio of the first nickel-cobalt precipitation underflow, the second nickel-cobalt precipitation underflow and the third nickel-cobalt precipitation underflow is (55% to 89%):(10% to 40%):(1% to 5%).

In an optional technical solution, a temperature of the above nickel-cobalt precipitation reaction is 50°C to 70°C, a time of the nickel-cobalt precipitation reaction is 0.5 h to 5 h, and a nickel-cobalt precipitation rate in the nickel-cobalt precipitation reaction is 70% to 98%.

In an optional technical solution, the cationic components in the above nickel-cobalt-containing solution are as follows: nickel ions 0.1 g/L to 120 g/L, cobalt ions 0.1 g/L to 120 g/L, magnesium ions 0.5 g/L to 25 g/L, and divalent manganese ions 0.5 g/L to 10 g/L, further preferably nickel ions 3 g/L to 5 g/L, cobalt ions 0.2 g/L to 0.5 g/L, magnesium ions 5 g/L to 8 g/L, and divalent manganese ions 2 g/L to 4 g/L.

According to an aspect of the present disclosure, a nickel-cobalt hydroxide product is provided, which is prepared by the method for precipitating nickel and cobalt in the nickel-cobalt-containing solution described above.

In an optional technical solution, the above nickel-cobalt hydroxide product has a D50 particle size of 20 µm to 60 µm, a water content of 45% to 55%, a nickel content of 39% to 44%, a manganese content of 2% to 4%, and a magnesium content of 0.05% to 1.0%.

By applying the technical solution of the present disclosure, the present disclosure provides a method for precipitating nickel and cobalt in a nickel-cobalt-containing solution and a nickel-cobalt hydroxide product, the present disclosure effectively solves the problems of poor environmental friendliness, small particle size of nickel-cobalt hydroxide, and less prone to settle, high water content of filter cake, or poor precipitation rate when precipitating nickel and cobalt in laterite nickel ore acid leaching iron-aluminum-eliminated solution in the related art. By using the above nickel-cobalt precipitation method, the auxiliary used is more environmentally friendly, the precipitation rate is high, and the nickel-cobalt hydroxide morphology is better, the particle size is larger, and it has a good settling capacity, which is conducive to the subsequent liquid-solid separation process, and thus also reducing the water content of the nickel-cobalt hydroxide product.

In order to achieve the above and related objects, one or more aspects of the present disclosure comprise the features hereinafter fully described and particularly pointed out in the claims. The following description and the accompanying drawings set forth in detail certain exemplary aspects of the present disclosure. However, these aspects are indicative of but a few of the various ways in which the principles of the present disclosure may be employed. In addition, the present disclosure is intended to include all such aspects and their equivalents.

### Brief Description of Drawings

Other objects and results of the present disclosure will become more apparent and readily understood by reference to the following description and claims taken in conjunction with the accompanying drawings, and as the disclosure is more fully understood. The accompanying drawings, which constitute a part of the present disclosure, are used to provide a further understanding of the present disclosure, and the schematic examples of the present disclosure and the description thereof are used to explain the present disclosure, and do not constitute an undue limitation of the present disclosure. In the drawings:
FIG. 1 shows a process flow diagram of a method for precipitating nickel and cobalt in a nickel-cobalt-containing solution according to an example of the present disclosure;
FIG. 2 shows a process flow diagram of a method for precipitating nickel and cobalt in a nickel-cobalt-containing solution according to another example of the present disclosure.

The same reference numbers in all drawings indicate similar or corresponding features or functions.

### Best Mode for Carrying out the Invention

In the following description, for purposes of explanation, numerous specific details are set forth in order to provide a thorough understanding of one or more examples. It is apparent, however, in the absence of conflict that the examples in the present disclosure and the features in the examples can be combined with each other; the examples can also be practiced without these specific details. In other examples, well-known structures and devices are shown in the form of block diagrams for ease of description of one or more examples.

Specific examples of the present disclosure will be described in detail below with reference to the accompanying drawings.

As described in the background art, in the related art, it has poor environmental friendliness, small particle size of nickel-cobalt hydroxide, high water content of filter cake, or low precipitation rate when precipitating nickel and cobalt in laterite nickel ore acid leaching iron-aluminum-eliminated solution. In order to solve the above problems, the present disclosure provides a method for precipitating nickel and cobalt in a nickel-cobalt-containing solution and a nickel-cobalt hydroxide product.

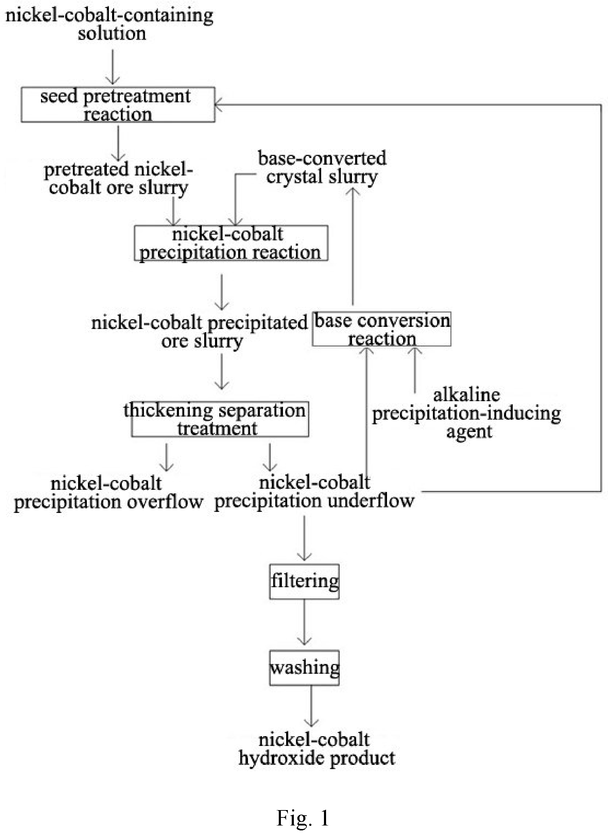

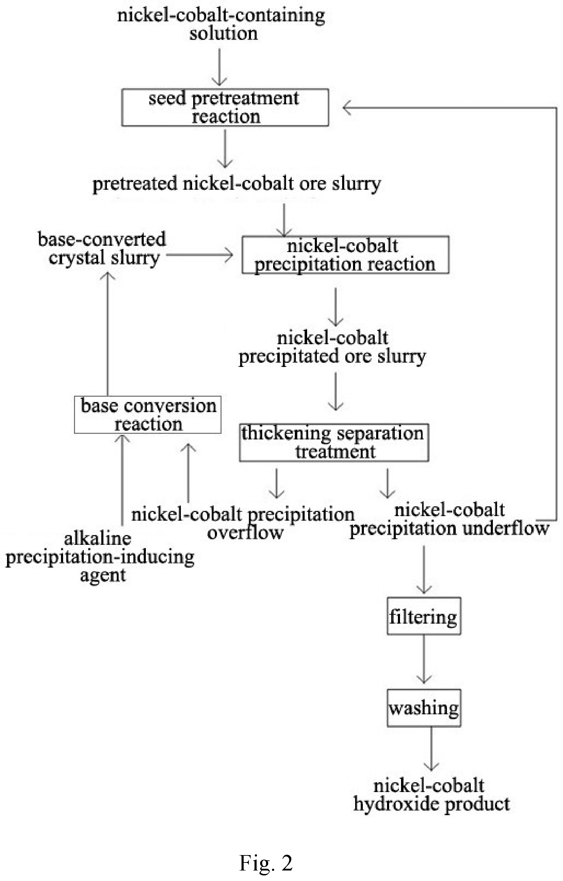

In a typical embodiment of the present disclosure, a method for precipitating nickel and cobalt in a nickel-cobalt-containing solution is provided, cations in the nickel-cobalt-containing solution include nickel ions, cobalt ions, magnesium ions and manganese ions, wherein, as shown in Fig. 1 and Fig. 2, the method comprises: S100, conducting a seed pretreatment reaction on the nickel-cobalt-containing solution by using a first nickel-cobalt precipitation underflow to form a pretreated nickel-cobalt ore slurry; S200, adding an alkaline precipitation-inducing agent to a second nickel-cobalt precipitation underflow for conducting a base conversion reaction to form a base-converted crystal slurry; or adding an alkaline precipitation-inducing agent to a first nickel-cobalt precipitation overflow for conducting a base conversion reaction to form a base-converted crystal slurry; S300, continuously introducing the pretreated nickel-cobalt ore slurry and the base-converted crystal slurry into a reactor for conducting a nickel-cobalt precipitation reaction to obtain a nickel-cobalt precipitated ore slurry; S400, continuously conducting a thickening separation treatment on the nickel-cobalt precipitated ore slurry to obtain a nickel-cobalt precipitation underflow and a nickel-cobalt precipitation overflow; the nickel-cobalt precipitation underflow consists of the first nickel-cobalt precipitation underflow, the second nickel-cobalt precipitation underflow and a third nickel-cobalt precipitation underflow; the nickel-cobalt precipitation overflow comprises the first nickel-cobalt precipitation overflow; and S500, sequentially filtering and washing the third nickel-cobalt precipitation underflow to obtain a nickel-cobalt hydroxide product.

The method for precipitating nickel and cobalt in the present disclosure includes: adding a first nickel-cobalt precipitation underflow to a nickel-cobalt-containing solution for a seed pretreatment reaction, that is, pre-mixing a partial nickel-cobalt hydroxide precipitate as a seed crystal with a nickel-cobalt-containing solution, so that the magnesium and manganese in the nickel-cobalt hydroxide precipitate and the nickel and cobalt in the nickel-cobalt-containing solution sufficiently undergo a replacement reaction, thereby greatly removing the manganese and magnesium in the nickel-cobalt hydroxide precipitate, promoting the aggregation and precipitation of nickel ions and cobalt ions in the solution, forming a more stable precipitation structure with a larger particle size, improving the particle size and settling property of the precipitate, and finally obtaining a nickel-cobalt hydroxide product with better quality.

After the magnesium and manganese in the nickel-cobalt hydroxide precipitate and the nickel and cobalt in the nickel-cobalt-containing solution sufficiently undergo a replacement reaction, the pretreated nickel-cobalt ore slurry and the base-converted crystal slurry are continuously introduced into a reactor for nickel-cobalt precipitation reaction. In this process, the present disclosure does not use sulfide and does not use sodium hydroxide strong base like the traditional precipitation reaction, nor does it directly use magnesium hydroxide with lower activity. The precipitant used in the present disclosure is a base-converted crystal slurry formed after a base conversion reaction of the second nickel-cobalt precipitation underflow or the first nickel-cobalt precipitation overflow through an alkaline precipitation-inducing agent, and as described above, the precipitant is obtained by a base conversion reaction of the second nickel-cobalt precipitation underflow or the first nickel-cobalt precipitation overflow, which is obtained by a continuous precipitation reaction, through an alkaline precipitation-inducing agent. Specifically, the alkaline precipitation-inducing agent is added to a partial overflow obtained in a front-stage process (that is, the first nickel-cobalt precipitation overflow), for a base conversion reaction to obtain a base-converted crystal slurry; or the alkaline precipitation-inducing agent is added to a partial underflow obtained in the front-stage process (that is, the second nickel-cobalt precipitation underflow), for conducting a base conversion reaction to form a base-converted crystal slurry.

As described above, in addition to the nickel ions and cobalt ions to be precipitated in the nickel-cobalt-containing solution, a large amount of magnesium ions and divalent manganese ions are also contained, and accordingly, the nickel-cobalt precipitation underflow and the nickel-cobalt precipitation overflow generated in the front-stage process also contain a large amount of magnesium ions and divalent manganese ions. The alkaline precipitation-inducing agent is added to the second nickel-cobalt precipitation underflow or the first nickel-cobalt precipitation overflow, and these magnesium ions and divalent manganese ions can be converted into magnesium hydroxide and manganese hydroxide, respectively. Meanwhile, since the present disclosure prepares the base-converted crystal slurry online by using the alkaline precipitation-inducing agent during the process of continuous base conversion precipitation and continuous thickening separation, the base-converted crystal slurry with higher activity can return to the front-stage process in time to participate in the nickel-cobalt precipitation reaction, which also ensures that the base-converted crystal slurry has a higher precipitation activity. In addition, the base-converted crystal slurry further contains a part of the nickel-cobalt hydroxide generated in the front-stage process (from the second nickel-cobalt precipitation underflow), which can also play the role of seed template during the nickel-cobalt precipitation reaction, promoting the precipitation and crystal growth of the nickel-cobalt hydroxide.

Based on the above reasons, the present disclosure effectively solves the problems in the related art: the nickel-cobalt hydroxide has a small particle size and is less prone to settle, the filter cake has a high water content, the precipitation rate is poor, and the magnesium content is high before technical improvement, when precipitating nickel and cobalt in the nickel-cobalt-containing solution. By using the method for precipitating nickel and cobalt in the nickel-cobalt-containing solution described above, the auxiliary used is more environmentally friendly, the precipitation rate is high, and the nickel-cobalt hydroxide product has a better morphology and a larger particle size, and has a good settling capacity, which is conducive to the subsequent liquid-solid separation process, and thus also reducing the water content of the nickel-cobalt hydroxide product. Meanwhile, the obtained nickel-cobalt hydroxide product has a lower content of magnesium ions and manganese ions.

In a preferred embodiment, in order to maintain a better precipitation activity of the base-converted crystal slurry and prevent it from aging after being left for a long time, the base-converted crystal slurry is placed in S300 to participate in the nickel-cobalt precipitation reaction within 5 min, more preferably 3 min.

In an embodiment of the present disclosure, in the above S100, the temperature of the seed pretreatment reaction is 25°C to 100°C, preferably 50°C to 80°C, and the time of the seed pretreatment reaction is 0.1 h to 10 h, preferably 1 h to 5 h.

The optimal reaction temperature range may ensure the rate and conversion rate of the seed pretreatment reaction, so that the nickel ions and cobalt ions may quickly and efficiently precipitate on the surface of the seed crystal to form a precipitate with a larger particle size, thereby improving the efficiency of nickel-cobalt precipitation and product quality, and reducing energy consumption. Wherein, the temperature of the seed pretreatment reaction may be 25°C, 30°C, 35°C, 40°C, 45°C, 50°C, 55°C, 60°C, 65°C, 70°C, 75°C, 80°C, 85°C, 90°C, 95°C or 100°C, and certainly is not limited to any one value of 25°C to 100°C. The time of the seed pretreatment reaction may be 0.1 h, 1 h, 1.5 h, 2 h, 3 h, 4 h, 5 h, 6 h, 8 h, 9 h or 10 h, and certainly is not limited to any one value of 0.1 h to 10 h.

In an embodiment of the present disclosure, in the above S100, the mass of the first nickel-cobalt precipitation underflow is 0.1% to 99% of the total mass of the nickel-cobalt precipitation underflow.

The proportion of the mass of the first nickel-cobalt precipitation underflow to the total mass of the nickel-cobalt precipitation underflow directly affects the effect of seed pretreatment reaction, and an appropriate amount of the first nickel-cobalt precipitation underflow may promote the formation of the crystal seed and the growth of the precipitate, thereby improving the settling performance of the precipitate. By adjusting the proportion of the first nickel-cobalt precipitation underflow in the total mass of the nickel-cobalt precipitation underflow, the precipitation process may be optimized to improve the precipitation efficiency, while ensuring the flexibility of the process and adapting to different concentrations of nickel-cobalt-containing solution. The mass of the first nickel-cobalt precipitation underflow may be 0.1%, 1%, 2%, 3%, 4%, 5%, 6%, 8%, 10%, 12%, 15%, 18%, 20%, 25%, 28%, 30%, 35%, 40%, 45%, 50%, 55%, 60%, 70%, 80%, 90% or 99% of the total mass of the nickel-cobalt precipitation underflow, and certainly is not limited to any one value of 0.1% to 99%.

The above alkaline precipitation-inducing agent is added in the form of an aqueous solution or a slurry, and in order to make the base conversion reaction more stable and the activity of the formed base-converted crystal slurry higher, in a preferred embodiment, in the above S200, the total mass concentration of the alkaline precipitation-inducing agent is 0.1% to 60%, preferably 3% to 20%, and further preferably 3% to 15%. Controlling the concentration thereof within the above ranges, on the one hand, makes the base conversion reaction more stable, and on the other hand makes the concentration of the base-converted crystal slurry more suitable, thus promoting the nickel-cobalt precipitation reaction to be more efficient and stable. Specifically, the concentration of the alkaline precipitation-inducing agent directly affects the pH value in the solution, and selecting a reasonable concentration range helps promote the effective precipitation of nickel and cobalt, avoids co-precipitation of other impurity ions, and improves the efficiency of nickel-cobalt precipitation, thereby improving the purity of the product while controlling the cost and reducing the influence on the environment. The total mass concentration of the alkaline precipitation-inducing agent may be 0.1%, 1%, 2%, 3%, 4%, 5%, 6%, 8%, 10%, 12%, 15%, 18%, 20%, 25%, 28%, 30%, 35%, 40%, 45%, 50%, 55% or 60%, and certainly is not limited to any one value of 0.1% to 60%.

In a preferred embodiment, in the above S200, the alkaline precipitation-inducing agent is a mixture of an alkaline substance and water, wherein the alkaline substance is any one or more selected from a group consisting of sodium hydroxide, potassium hydroxide, calcium hydroxide, magnesium hydroxide, calcium oxide, magnesium oxide and a carbonate.

By using the above precipitation-inducing agent, the precipitation activity of the base-converted crystal slurry is more suitable, which not only enables the nickel and cobalt to precipitate more stably, but also facilitates better morphology of the nickel-cobalt hydroxide precipitate particles; the liquid-solid separation is easier, and the final product has a lower water content and a lower manganese content.

Further, preferably, in the above S200, the alkaline substance is a mixture of sodium hydroxide and potassium hydroxide, and the mass ratio of sodium hydroxide to potassium hydroxide is (1 to 4):(1 to 4). Compared with other alkaline precipitation-inducing agents such as calcium oxide, calcium hydroxide or sodium hydroxide, by using the compound precipitation-inducing agent at the mass ratio described above, the formed base-converted crystal slurry has a better effect, which has a better promoting effect on improving the nickel-cobalt hydroxide morphology, precipitation rate, particle size and the like during the process of base conversion precipitation process in combination with the seed template. The mass ratio of sodium hydroxide to potassium hydroxide may be 1:1, 1:4, 1:2 or 4:1, certainly not limited to any ratio of the mass ratio of sodium hydroxide to potassium hydroxide of (1 to 4):(1 to 4).

In order to more fully precipitate the nickel ions and cobalt ions in the mixed solution, in a preferred embodiment, based on the theoretical total mole number of hydroxide and carbonate required for nickel-cobalt precipitation in the above pretreated nickel-cobalt ore slurry, the total mole number of hydroxide and/or carbonate in the alkaline precipitation-inducing agent is 0.5 times to 1.5 times the theoretical total mole number. In a practical operation process, in order to further reduce the impurity content in the nickel-cobalt hydroxide product, such as magnesium and manganese, it is preferable that the mole number of hydroxide in the precipitation-inducing agent is 0.8 times to 0.9 times the theoretical mole number. Under such an operation, a part of the direct yield of nickel-cobalt hydroxide may be lost, but the product is purer.

In an embodiment of the present disclosure, in the above S200, the temperature of the base conversion reaction is 25°C to 100°C, preferably 50°C to 60°C, and the time of the base conversion reaction is 0.1 min to 30 min, preferably 1 min to 10 min, further preferably 3 min to 5 min.

Based on the base conversion reaction kinetics, controlling the temperature and time of base conversion reaction within the above range helps to make the reaction proceed under suitable conditions, improve the nickel-cobalt precipitation efficiency and product quality, while reducing energy consumption. The temperature of the base conversion reaction may be 25°C, 30°C, 35°C, 40°C, 45°C, 50°C, 55°C, 60°C, 65°C, 70°C, 75°C, 80°C, 85°C, 90°C, 95°C or 100°C, and certainly is not limited to any one value of 25°C to 100°C. The time of the base conversion reaction may be 0.1 min, 1 min, 2 min, 3 min, 4 min, 5 min, 6 min, 8 min, 10 min, 12 min, 14 min, 16 min, 18 min, 20 min, 23 min, 25 min, 28 min or 30 min, and certainly is not limited to any one of 0.1 min to 30 min.

In an embodiment of the present disclosure, in the above S200, the mass of the first nickel-cobalt precipitation overflow is 1% to 99%, preferably 5% to 30%, of the total mass of the nickel-cobalt precipitation overflow.

The control of the first nickel-cobalt precipitation overflow is based on the consideration of the material flow balance during the precipitation process, and an appropriate amount of the first nickel-cobalt precipitation overflow helps to maintain the growth and settlement of the precipitate, while too much or too little overflow will both affect the precipitation effect. Adjusting the mass proportion of the first nickel-cobalt precipitation overflow in the nickel-cobalt precipitation overflow helps to optimize the nickel-cobalt precipitation process, improve the nickel-cobalt precipitation efficiency, while achieving the flexibility and stability of the nickel-cobalt precipitation process to adapt to different concentrations of nickel-cobalt-containing solution. The mass of the first nickel-cobalt precipitation overflow may be 1%, 2%, 3%, 4%, 5%, 6%, 8%, 10%, 12%, 15%, 18%, 20%, 25%, 28%, 30%, 35%, 40%, 45%, 50%, 55%, 60%, 70%, 80%, 90% or 99% of the total mass of the nickel-cobalt precipitation overflow, and certainly is not limited to any one value of 1% to 99%.

In an embodiment of the present disclosure, in the above S200, the mass of the second nickel-cobalt precipitation underflow is 1% to 99% of the total mass of the nickel-cobalt precipitation underflow.

By controlling the mass proportion of the second nickel-cobalt precipitation underflow in the nickel-cobalt precipitation underflow, it is beneficial to optimize the nickel-cobalt precipitation process, improve the nickel-cobalt precipitation efficiency and the product quality, while ensuring the flexibility and stability of the nickel-cobalt precipitation process to adapt to different concentrations of nickel-cobalt-containing solution. The mass of the second nickel-cobalt precipitation underflow may be 1%, 2%, 3%, 4%, 5%, 6%, 8%, 10%, 12%, 15%, 18%, 20%, 25%, 28%, 30%, 35%, 40%, 45%, 50%, 55%, 60%, 70%, 80%, 90% or 99% of the total mass of the nickel-cobalt precipitation underflow, and certainly is not limited to any one value of 1% to 99%.

The active ingredients of the base-converted crystal slurry are mainly nickel-cobalt hydroxide, magnesium hydroxide and manganese hydroxide. In order to make the base-converted crystal slurry have a higher precipitation activity, in a preferred embodiment, when an alkaline precipitation-inducing agent is added to the above first nickel-cobalt precipitation overflow for conducting a base conversion reaction to form a base-converted crystal slurry, the mass ratio of the first nickel-cobalt precipitation underflow, the second nickel-cobalt precipitation underflow and the third nickel-cobalt precipitation underflow is (55% to 89%):(10% to 40%):(1% to 5%). By adjusting the mass ratio among the first nickel-cobalt precipitation underflow, the second nickel-cobalt precipitation underflow and the third nickel-cobalt precipitation underflow, it is helpful to optimize the precipitation process, maintain the optimal growth state of the precipitate, optimize the settling performance of the precipitate, improve the precipitation efficiency and the product quality, while ensuring the stability and operability of the process. The mass ratio of the first nickel-cobalt precipitation underflow, the second nickel-cobalt precipitation underflow, and the third nickel-cobalt precipitation underflow may be 85%:10%:5%, 55%:40%:5%, or 65%:30%:5%, certainly, is not limited to any one value of (55% to 89%):(10% to 40%):(1% to 5%).

In a practical operation process, the third nickel-cobalt precipitation underflow is directly filtered and washed to readily obtain a nickel-cobalt hydroxide product with a low manganese content. However, when the first nickel-cobalt precipitation overflow participates in the base conversion reaction, the remaining part of the nickel-cobalt precipitation overflow may be directly subjected to a second stage for nickel-cobalt precipitation. When the nickel-cobalt precipitation overflow does not participate in the base conversion reaction, the nickel-cobalt precipitation overflow can be directly discharged to conduct the second stage for nickel-cobalt precipitation (such as returning to the front-stage process such as laterite nickel ore high pressure acid leaching process).

In order to more fully convert magnesium ions and divalent manganese ions in the second nickel-cobalt precipitation underflow or the first nickel-cobalt precipitation overflow into magnesium hydroxide and manganese hydroxide, in a preferred embodiment, a temperature of the nickel-cobalt precipitation reaction is 50°C to 70°C, and a time of the nickel-cobalt precipitation reaction is 0.5 h to 5 h. Under this process condition, the finally formed base-converted crystal slurry has a better nickel-cobalt precipitation activity and a higher nickel-cobalt precipitation rate, reduces waste of resources, and has a better promotion effect on the nickel-cobalt precipitation process in the mixed solution. By optimizing the precipitation conditions, including using the seed pretreatment reaction and controlling the concentration and composition of the alkaline precipitation-inducing agent, the precipitation rate of the nickel ions and cobalt ions and the stability of the precipitate can be improved, so that the nickel-cobalt precipitation rate in the nickel-cobalt precipitation reaction is 70% to 98%. The temperature of the nickel-cobalt precipitation reaction may be 50°C, 55°C, 60°C, 65°C or 70°C, and certainly is not limited to any one value of 50°C to 70°C. The time of the nickel-cobalt precipitation reaction may be 0.5 h, 1 h, 1.2 h, 1.5 h, 1.8 h, 2 h, 2.5 h, 3 h, 3.5 h, 4 h, 4.5 h or 5 h, and certainly is not limited to any one value of 0.5 h to 5 h. The nickel-cobalt precipitation rate in the nickel-cobalt precipitation reaction may be 70%, 72%, 74%, 76%, 78%, 80%, 82%, 83%, 85%, 86%, 87%, 88%, 90%, 95% or 98%, certainly is not limited to any one value of 70% to 98%.

The above method for precipitating nickel and cobalt provided by the present disclosure may be continuously performed, and after a fresh nickel-cobalt-containing solution (such as laterite nickel ore acid leaching iron-aluminum-eliminated solution) is continuously introduced into the seed pretreatment reaction, the fresh nickel-cobalt-containing solution continuously enters the reactor to conduct the nickel-cobalt precipitation reaction with the base-converted crystal slurry returned from the back-stage process. The obtained precipitation slurry continuously enters a liquid-solid separation stage to form an underflow and an overflow, and part of the underflow and optional part of the overflow continuously participate in the base conversion reaction, and a base-converted crystal slurry is continuously formed and returns to the front-stage process to participate in the nickel-cobalt precipitation reaction. At the operation initial stage of the method, a sodium hydroxide precipitation can be first performed on the mixed solution, and after the initial underflow and overflow are formed, the base-converted crystal slurry of the present disclosure can be prepared by the above-mentioned preparation process, as a precipitant after stable operation.

The above precipitation method of the present disclosure is used for a nickel-cobalt-containing solution, such as nickel-cobalt precipitation of laterite nickel ore acid leaching iron-aluminum-eliminated solution, and is particularly suitable for the following solution: the cationic components in the above nickel-cobalt-containing solution are as follows: nickel ions 0.1 g/L to 120 g/L, cobalt ions 0.1 g/L to 120 g/L, magnesium ions 0.5 g/L to 25 g/L, and divalent manganese ions 0.5 g/L to 10 g/L, further preferably, nickel ions 3 g/L to 5 g/L, cobalt ions 0.2 g/L to 0.5 g/L, magnesium ions 5 g/L to 8 g/L, and divalent manganese ions 2 g/L to 4 g/L. By controlling the concentration range of the metal ions in the solution, in combination with seed pretreatment and base conversion reaction, precipitation conditions can be optimized, effective separation and recovery of nickel and cobalt are realized, and the co-precipitation risk of impurities such as magnesium and manganese is reduced.

According to an aspect of the present disclosure, a nickel-cobalt hydroxide product is provided, which is obtained by the method for precipitating nickel and cobalt in the nickel-cobalt-containing solution described above.

The nickel-cobalt hydroxide product prepared by the above method has optimized the nickel-cobalt precipitation process, avoiding the co-precipitation of other impurities, thereby ensuring high purity and high nickel-cobalt content of the product, making it more suitable for battery materials and other industrial applications.

In an embodiment of the present disclosure, the above nickel-cobalt hydroxide product has a D50 particle size of 20 µm to 60 µm, a water content of 45% to 55%, a nickel content of 39% to 44%, a manganese content of 2% to 4%, and a magnesium content of 0.05% to 1.0%.

The nickel-cobalt hydroxide product of the present disclosure has moderate D50 particle size and water content, a nickel content of up to 39% to 44%, a manganese content of not more than 4%, and a magnesium content of not more than 1.0%, which make it have good settling performance and filter cake performance, and is suitable for the requirements of battery materials and other industrial applications.

The present disclosure is further described in detail below with reference to specific examples, and these examples are not to be construed as limiting the protection scope claimed by the present disclosure.

The object to be treated in the following examples is a laterite nickel ore acid leaching iron-aluminum-eliminated solution (aqueous solution), the anions of which are sulfate ions, and the cation components are as follows:

| Cationic species | Ni²⁺ | Co²⁺ | Mg²⁺ | Mn²⁺ |
|---|---|---|---|---|
| Concentration | 3 g/L to 5 g/L | 0.2 g/L to 0.5 g/L | 5 g/L to 8 g/L | 2 g/L to 4 g/L |

### Example 1

Referring to the process flow diagram of the method for precipitating nickel and cobalt in the nickel-cobalt-containing solution shown in FIG. 1, a first nickel-cobalt precipitation underflow (that is, an underflow after precipitation of nickel and cobalt, accounting for 85% of a total amount of nickel-cobalt precipitation underflow in the back-stage process) was added to the above laterite nickel ore acid leaching iron-aluminum-eliminated solution, and they were stirred and mixed at 70°C for 3.0 h to complete the seed pretreatment reaction to form a pretreated nickel-cobalt ore slurry.

The pretreated nickel-cobalt ore slurry and the base-converted crystal slurry prepared in the back-stage process were continuously convectively added to the reactor for nickel-cobalt precipitation reaction, the reaction time was 3.0 h, the reaction temperature was 60°C, and a nickel-cobalt precipitated ore slurry was obtained; and the nickel-cobalt precipitated ore slurry was continuously fed into a thickener for a thickening separation treatment to obtain a nickel-cobalt precipitation underflow and a nickel-cobalt precipitation overflow. The nickel-cobalt precipitation underflow consisted of a first nickel-cobalt precipitation underflow, a second nickel-cobalt precipitation underflow, and a third nickel-cobalt precipitation underflow. A nickel-cobalt hydroxide product was obtained by filtering and washing the third nickel-cobalt precipitation underflow.

An alkaline precipitation-inducing agent having a total mass concentration of 20% was prepared, which was a slurry formed by dissolving sodium hydroxide and potassium hydroxide in water at a mass ratio of 4:4; the second nickel-cobalt precipitation underflow accounting for 10% of the nickel-cobalt precipitation underflow was continuously introduced into a base conversion reactor, and the alkaline precipitation-inducing agent was added therein to carry out a base conversion reaction, and the hydroxide mole number in the precipitation-inducing agent was 0.9 times the theoretical mole number, based on the theoretical mole number of hydroxide required for nickel-cobalt precipitation in the mixed solution. The temperature of the above base conversion reaction was 50°C, and the reaction time was 3 min, to obtain a base-converted crystal slurry. The formed base-converted crystal slurry was continuously returned to the nickel-cobalt precipitation reaction step to obtain a nickel-cobalt precipitated ore slurry.

After testing, the nickel-cobalt precipitation rate in the nickel-cobalt precipitation reaction was 85%, the D50 particle size of the nickel-cobalt hydroxide product was 45 µm to 55 µm, the water content was 55%, the nickel content was 43%, the manganese content was 2%, and the magnesium content was 0.1%.

### Example 2

Referring to the process flow diagram of the method for precipitating nickel and cobalt in the nickel-cobalt-containing solution shown in FIG. 2, an underflow after precipitation of nickel and cobalt accounting for 30% of a total amount of nickel-cobalt precipitation underflow in the back-stage process was added to the above laterite nickel ore acid leaching iron-aluminum-eliminated solution, and they were stirred and mixed at 40°C for 10.0 h to complete the seed pretreatment reaction to form a pretreated nickel-cobalt ore slurry.

The pretreated nickel-cobalt ore slurry and the base-converted crystal slurry prepared in the back-stage process were continuously convectively added to the reactor for nickel-cobalt precipitation reaction, the reaction time was 1.0 h, the reaction temperature was 70°C, and a nickel-cobalt precipitated ore slurry was obtained; and the nickel-cobalt precipitated ore slurry was continuously fed into a thickener for a thickening separation treatment to obtain a nickel-cobalt precipitation underflow and a nickel-cobalt precipitation overflow. The nickel-cobalt precipitation underflow consisted of a first nickel-cobalt precipitation underflow, a second nickel-cobalt precipitation underflow and a third nickel-cobalt precipitation underflow, and the proportion of the second nickel-cobalt precipitation underflow in the nickel-cobalt precipitation underflow was 0. A nickel-cobalt hydroxide product was obtained by filtering and washing the third nickel-cobalt precipitation underflow.

An alkaline precipitation-inducing agent having a total mass concentration of 20% was prepared, which was a slurry formed by dissolving sodium hydroxide and potassium hydroxide in water according to a mass ratio of 4:4; the first nickel-cobalt precipitation overflow accounting for 10% of the nickel-cobalt precipitation overflow was continuously introduced into a base conversion reactor, and the alkaline precipitation-inducing agent was added therein to carry out base conversion reaction, and the hydroxide mole number in the precipitation-inducing agent was 0.9 times the theoretical mole number, based on the theoretical mole number of hydroxide required for nickel-cobalt precipitation in the mixed solution. The temperature of the above base conversion reaction was 50°C, and the reaction time was 3 min, to obtain a base-converted crystal slurry. The formed base-converted crystal slurry was continuously returned to the nickel-cobalt precipitation reaction step to obtain a nickel-cobalt precipitated ore slurry.

After testing, the nickel-cobalt precipitation rate in the nickel-cobalt precipitation reaction was 86%, the D50 particle size of the nickel-cobalt hydroxide product was 45 µm to 55 µm, the water content was 54%, the nickel content was 44%, the manganese content was 2.2%, and the magnesium content was 0.15%.

### Example 3

This example differed from Example 1 only in that: the mass ratio of sodium hydroxide to potassium hydroxide was 1:4, the total mass concentration of the precipitation-inducing agent was 25%, and finally a nickel-cobalt hydroxide product was obtained.

After testing, the nickel-cobalt precipitation rate in the nickel-cobalt precipitation reaction was 85%, the D50 particle size of the nickel-cobalt hydroxide product was 45 µm to 50 µm, the water content was 56%, the nickel content was 43%, the manganese content was 2%, and the magnesium content was 0.1%.

### Example 4

This example differed from Example 1 only in that: the mass ratio of sodium hydroxide to potassium hydroxide was 0.6:4, and finally a nickel-cobalt hydroxide product was obtained.

After testing, the nickel-cobalt precipitation rate in the nickel-cobalt precipitation reaction was 85%, the D50 particle size of the nickel-cobalt hydroxide product was 40 µm to 45 µm, the water content was 58%, the nickel content was 43%, the manganese content was 2%, and the magnesium content was 0.1%.

### Example 5

This example differed from Example 1 only in that: the precipitation-inducing agent was magnesium oxide with a mass concentration of 10%, and finally a nickel-cobalt hydroxide product was obtained.

After testing, the nickel-cobalt precipitation rate in the nickel-cobalt precipitation reaction was 85%, the D50 particle size of the nickel-cobalt hydroxide product was 45 µm to 55 µm, the water content was 53%, the nickel content was 41%, the manganese content was 3%, and the magnesium content was 0.5%.

### Example 6

This example differed from Example 1 in that: the first nickel-cobalt precipitation underflow accounted for 55% of the total amount of nickel-cobalt precipitation underflow, and the mass ratio of the first nickel-cobalt precipitation underflow, the second nickel-cobalt precipitation underflow and the third nickel-cobalt precipitation underflow was 55:40:5, and finally the nickel-cobalt hydroxide product was obtained.

After testing, the nickel-cobalt precipitation rate in the nickel-cobalt precipitation reaction was 85%, the D50 particle size of the nickel-cobalt hydroxide product was 45 µm to 55 µm, the water content was 55%, the nickel content was 43%, the manganese content was 3%, and the magnesium content was 0.4%.

### Example 7

This example differed from Example 1 in that: the first nickel-cobalt precipitation underflow accounted for 90% of the total amount of nickel-cobalt precipitation underflow, and the mass ratio of the first nickel-cobalt precipitation underflow, the second nickel-cobalt precipitation underflow and the third nickel-cobalt precipitation underflow was 90:5:5, and finally the nickel-cobalt hydroxide product was obtained.

After testing, the nickel-cobalt precipitation rate in the nickel-cobalt precipitation reaction was 85%, the D50 particle size of the nickel-cobalt hydroxide product was 20 µm to 25 µm, the water content was 65%, the nickel content was 43%, the manganese content was 2%, and the magnesium content was 0.1%.

### Example 8

This example differed from Example 1 in that: the temperature of the seed pretreatment reaction was 80°C, the time of the seed pretreatment reaction was 5 h, and finally the nickel-cobalt hydroxide product was obtained.

After testing, the nickel-cobalt precipitation rate in the nickel-cobalt precipitation reaction was 85%, the D50 particle size of the nickel-cobalt hydroxide product was 45 µm to 55 µm, the water content was 55%, the nickel content was 44%, the manganese content was 1.5%, and the magnesium content was 0.05%.

### Example 9

This example differed from Example 1 in that: the temperature of the base conversion reaction was 40°C, the time of the base conversion reaction was 10 min, and finally the nickel-cobalt hydroxide product was obtained.

After testing, the nickel-cobalt precipitation rate in the nickel-cobalt precipitation reaction was 78%, the D50 particle size of the nickel-cobalt hydroxide product was 45 µm to 55 µm, the water content was 52%, the nickel content was 39%, the manganese content was 4%, and the magnesium content was 0.8%.

### Example 10

This example differed from Example 1 in that: the temperature of the nickel-cobalt precipitation reaction was 50°C, the time of the nickel-cobalt precipitation reaction was 5 h, and finally the nickel-cobalt hydroxide product was obtained.

After testing, the nickel-cobalt precipitation rate in the nickel-cobalt precipitation reaction was 83%, the D50 particle size of the nickel-cobalt hydroxide product was 40 µm to 53 µm, the water content was 56%, the nickel content was 42%, the manganese content was 4%, and the magnesium content was 1%.

### Example 11

This example differed from Example 1 in that: the hydroxide mole number in the alkaline precipitation-inducing agent was 0.8 times the theoretical mole number, based on the theoretical mole number of hydroxide required for nickel-cobalt precipitation in the mixed solution.

After testing, the nickel-cobalt precipitation rate in the nickel-cobalt precipitation reaction was 80%, the D50 particle size of the nickel-cobalt hydroxide product was 45 µm to 55 µm, the water content was 54%, the nickel content was 43.1%, the manganese content was 2.1%, and the magnesium content was 0.12%.

### Example 12

This example differed from Example 1 in that: the hydroxide mole number in the alkaline precipitation-inducing agent was 1.2 times the theoretical mole number, based on the theoretical mole number of hydroxide required for nickel-cobalt precipitation in the mixed solution.

After testing, the nickel-cobalt precipitation rate in the nickel-cobalt precipitation reaction was 98%, the D50 particle size of the nickel-cobalt hydroxide product was 45 µm to 55 µm, the water content was 55%, the nickel content was 41%, the manganese content was 4%, and the magnesium content was 1%.

### Example 13

This example differed from Example 1 in that: the base-converted crystal slurry was continuously returned to the nickel-cobalt precipitation reaction step within 5 min, and a nickel-cobalt precipitation reaction was performed.

After testing, the nickel-cobalt precipitation rate in the nickel-cobalt precipitation reaction was 83%, the D50 particle size of the nickel-cobalt hydroxide product was 55 µm to 60 µm, the water content was 53%, the nickel content was 42%, the manganese content was 2.5%, and the magnesium content was 0.4%.

### Comparative Example 1

A first nickel-cobalt precipitation underflow (that is, an underflow after precipitation of nickel and cobalt, accounting for 30% of a total amount of nickel-cobalt precipitation underflow in the back-stage process) was added to the above laterite nickel ore acid leaching iron-aluminum-eliminated solution, and they were stirred and mixed at 70°C for 3.0 h to complete the seed pretreatment reaction to form a pretreated nickel-cobalt ore slurry.

The pretreated nickel-cobalt ore slurry and a pre-prepared 20% sodium hydroxide aqueous solution were continuously convectively added to the reactor for direct nickel-cobalt precipitation reaction, the reaction time was 3.0 h, the reaction temperature was 60°C, and a nickel-cobalt precipitated ore slurry was obtained; and the nickel-cobalt precipitated ore slurry was continuously fed into a thickener for a thickening separation treatment to obtain a nickel-cobalt precipitation underflow and a nickel-cobalt precipitation overflow. The nickel-cobalt precipitation underflow consisted of a first nickel-cobalt precipitation underflow, a second nickel-cobalt precipitation underflow, and a third nickel-cobalt precipitation underflow. A nickel-cobalt hydroxide product was obtained by filtering and washing the third nickel-cobalt precipitation underflow.

After testing, the nickel-cobalt precipitation rate in the nickel-cobalt precipitation reaction was 85%, the D50 particle size of the nickel-cobalt hydroxide product was 3 µm to 5 µm, the water content was 75%, the nickel content was 36%, the manganese content was 5%, and the magnesium content was 1.2%.

### Comparative Example 2

The above laterite nickel ore acid leaching iron-aluminum-eliminated solution and the base-converted crystal slurry prepared in the back-stage process were continuously convectively added to a reactor to directly perform the nickel-cobalt precipitation reaction, the reaction time was 3.0 h, the reaction temperature was 60°C, and a nickel-cobalt precipitated ore slurry was obtained; and the nickel-cobalt precipitated ore slurry was continuously fed into a thickener for a thickening separation treatment to obtain a nickel-cobalt precipitation underflow and a nickel-cobalt precipitation overflow. The nickel-cobalt precipitation underflow consisted of a first nickel-cobalt precipitation underflow, a second nickel-cobalt precipitation underflow, and a third nickel-cobalt precipitation underflow. A nickel-cobalt hydroxide product was obtained by filtering and washing the third nickel-cobalt precipitation underflow.

An alkaline precipitation-inducing agent having a total mass concentration of 20% was prepared, which was a slurry formed by dissolving sodium hydroxide and potassium hydroxide in water at a mass ratio of 4:4; the second nickel-cobalt precipitation underflow accounting for 5% of the nickel-cobalt precipitation underflow was continuously introduced into a base conversion reactor, and the alkaline precipitation-inducing agent was added therein to carry out a base conversion reaction, and the hydroxide mole number in the precipitation-inducing agent was 0.9 times the theoretical number of moles, based on the theoretical mole number of hydroxide required for nickel-cobalt precipitation in the mixed solution. The temperature of the above base conversion reaction was 70°C, and the reaction time was 1 min, to obtain a base-converted crystal slurry. The formed base-converted crystal slurry was continuously returned to the nickel-cobalt precipitation reaction step to obtain a nickel-cobalt precipitated ore slurry.

After testing, the nickel-cobalt precipitation rate in the nickel-cobalt precipitation reaction was 89%, the D50 particle size of the nickel-cobalt hydroxide product was 45 µm to 55 µm, the water content was 55%, the nickel content was 39%, the manganese content was 7%, and the magnesium content was 2.5%.

From the above description, it can be seen that the above examples of the present disclosure achieve the following technical effects:
The method for precipitating nickel and cobalt in the present disclosure includes: adding a first nickel-cobalt precipitation underflow to a nickel-cobalt-containing solution for a seed pretreatment reaction, that is, pre-mixing a partial nickel-cobalt hydroxide precipitate as a seed crystal with a nickel-cobalt-containing solution, so that the magnesium and manganese in the nickel-cobalt hydroxide precipitate and the nickel and cobalt in the nickel-cobalt-containing solution sufficiently undergo a replacement reaction, thereby greatly removing the manganese and magnesium in the nickel-cobalt hydroxide precipitate, promoting the aggregation and precipitation of nickel ions and cobalt ions in the solution, forming a more stable precipitate structure with a larger particle size , improving the particle size and settling property of the precipitate, and finally obtaining a nickel-cobalt hydroxide product with a better quality.

The above is merely preferred examples of the present disclosure, and is not intended to limit the present disclosure. For those skilled in the art, various modifications and variations can be made to the present disclosure. Any modification, equivalent replacement, or improvement etc. made within the spirit and principle of the present disclosure should fall within the protection scope of the present disclosure.

## Claims

1. A method for precipitating nickel and cobalt in a nickel-cobalt-containing solution, cations in the nickel-cobalt-containing solution including nickel ions, cobalt ions, magnesium ions and manganese ions, **characterized in that** the method comprises:
S100, conducting a seed pretreatment reaction on the nickel-cobalt-containing solution by using a first nickel-cobalt precipitation underflow to form a pretreated nickel-cobalt ore slurry;
S200, adding an alkaline precipitation-inducing agent to a second nickel-cobalt precipitation underflow for a base conversion reaction to form a base-converted crystal slurry; or adding an alkaline precipitation-inducing agent to a first nickel-cobalt precipitation overflow for a base conversion reaction to form a base-converted crystal slurry;
S300, continuously introducing the pretreated nickel-cobalt ore slurry and the base-converted crystal slurry into a reactor for conducting a nickel-cobalt precipitation reaction to obtain a nickel-cobalt precipitated ore slurry;
S400, continuously conducting a thickening separation treatment on the nickel-cobalt precipitated ore slurry to obtain a nickel-cobalt precipitation underflow consisting of the first nickel-cobalt precipitation underflow, the second nickel-cobalt precipitation underflow and a third nickel-cobalt precipitation underflow, and a nickel-cobalt precipitation overflow comprising the first nickel-cobalt precipitation overflow; and
S500, sequentially filtering and washing the third nickel-cobalt precipitation underflow to obtain a nickel-cobalt hydroxide product.

2. The method for precipitating nickel and cobalt in a nickel-cobalt-containing solution according to claim 1, **characterized in that** in the S100, a temperature of the seed pretreatment reaction is 25°C to 100°C, and a time of the seed pretreatment reaction is 0.1 h to 10 h.

3. The method for precipitating nickel and cobalt in a nickel-cobalt-containing solution according to claim 1 or 2, **characterized in that** in the S100, a mass of the first nickel-cobalt precipitation underflow is 1% to 99% of a total mass of the nickel-cobalt precipitation underflow.

4. The method for precipitating nickel and cobalt in a nickel-cobalt-containing solution according to claim 1 or 2, **characterized in that** in the S200, a total mass concentration of the alkaline precipitation-inducing agent is 0.1% to 60%.

5. The method for precipitating nickel and cobalt in a nickel-cobalt-containing solution according to claim 4, **characterized in that** in the S200, the alkaline precipitation-inducing agent is a mixture of an alkaline substance and water, wherein the alkaline substance is any one or more selected from a group consisting of sodium hydroxide, potassium hydroxide, calcium hydroxide, magnesium hydroxide, calcium oxide, magnesium oxide and a carbonate.

6. The method for precipitating nickel and cobalt in a nickel-cobalt-containing solution according to claim 5, **characterized in that** in the S200, the alkaline substance is a mixture of the sodium hydroxide and the potassium hydroxide, and a mass ratio of the sodium hydroxide to the potassium hydroxide is (1 to 4):(1 to 4).

7. The method for precipitating nickel and cobalt in a nickel-cobalt-containing solution according to claim 1 or 2, **characterized in that** based on a theoretical total mole number of hydroxide and/or carbonate required for the nickel-cobalt precipitation in the pretreated nickel-cobalt ore slurry, a total mole number of hydroxide and carbonate in the alkaline precipitation-inducing agent is 0.5 times to 1.5 times the theoretical total mole number.

8. The method for precipitating nickel and cobalt in a nickel-cobalt-containing solution according to claim 1 or 2, **characterized in that** in the S200, a temperature of the base conversion reaction is 25°C to 100°C, and a time of the base conversion reaction is 0.1 min to 30 min.

9. The method for precipitating nickel and cobalt in a nickel-cobalt-containing solution according to claim 1 or 2, **characterized in that** in the S200, a mass of the first nickel-cobalt precipitation overflow is 1% to 99% of a total mass of the nickel-cobalt precipitation overflow.

10. The method for precipitating nickel and cobalt in a nickel-cobalt-containing solution according to claim 1 or 2, **characterized in that** in the S200, a mass of the second nickel-cobalt precipitation underflow is 1% to 99% of a total mass of the nickel-cobalt precipitation underflow.

11. The method for precipitating nickel and cobalt in a nickel-cobalt-containing solution according to claim 1 or 2, **characterized in that** when the alkaline precipitation-inducing agent is added to the first nickel-cobalt precipitation overflow for conducting the base conversion reaction to form the base-converted crystal slurry, the mass ratio of the first nickel-cobalt precipitation underflow, the second nickel-cobalt precipitation underflow and the third nickel-cobalt precipitation underflow is (55% to 89%):(10% to 40%):(1% to 5%).

12. The method for precipitating nickel and cobalt in a nickel-cobalt-containing solution according to claim 1 or 2, **characterized in that** a temperature of the nickel-cobalt precipitation reaction is 50°C to 70°C, a time of the nickel-cobalt precipitation reaction is 0.5 h to 5 h, and a nickel-cobalt precipitation rate in the nickel-cobalt precipitation reaction is 70% to 98%.

13. The method for precipitating nickel and cobalt in a nickel-cobalt-containing solution according to claim 1 or 2, **characterized in that** cationic components in the nickel-cobalt-containing solution are as follows: nickel ions 0.1 g/L to 120 g/L, cobalt ions 0.1 g/L to 120 g/L, magnesium ions 0.5 g/L to 25 g/L, and divalent manganese ions 0.5 g/L to 10 g/L.

14. A nickel-cobalt hydroxide product, **characterized by** being prepared by the method for precipitating nickel and cobalt in a nickel-cobalt-containing solution according to any one of claims 1 to 12.

15. The nickel-cobalt hydroxide product according to claim 14, **characterized in that** the nickel-cobalt hydroxide product has a D50 particle size of 20 µm to 60 µm, a water content of 45% to 55%, a nickel content of 39% to 44%, a manganese content of 2% to 4%, and a magnesium content of 0.05% to 1.0%.
